# EUROPEAN PATENT SPECIFICATION

(11) **EP 1 458 819 B1**
(45) Date of publication and mention of the grant of the patent: **22.06.2005**
(21) Application number: 03771323.7
(22) Date of filing: 25.07.2003
(51) Int. Cl.: C09B 67/20, C09B 67/04, C09D 11/00, C09D 11/16

(54) **SOLID PIGMENT COMPOSITION FOR PIGMENT INK, PIGMENT INK CONTAINING THE SAME, AND PROCESS FOR PREPARING THESE**
FESTE PIGMENTZUSAMMENSETZUNG FÜR PIGMENTTINTE, PIGMENTTINTE, DIE DIESE ENTHÄLT SOWIE HERSTELLUNGSVERFAHREN FÜR DIE ZUSAMMENSETZUNG DER TINTE
COMPOSITION DE PIGMENT SOLIDE DESTINEE A UNE ENCRE PIGMENTAIRE, ENCRE PIGMENTAIRE COMPRENANT CETTE DERNIERE ET PROCEDE DE PREPARATION DE LA COMPOSITION ET DE L'ENCRE PIGMENTAIRE

(30) Priority: 26.07.2002 JP 2002218363
(43) Date of publication of application: 22.09.2004
(73) Proprietor: Orient Chemical Industries, Ltd., Osaka-shi, Osaka 535-0022 (JP)
(72) Inventor: NAGASAWA, Toshiyuki, Yawata-shi, Kyoto 614-8101 (JP); UEDA, Yoichi, Neyagawa-shi, Osaka 572-0013 (JP)
(74) Representative: VOSSIUS & PARTNER
(86) International application number: PCT/JP2003/009423
(87) International publication number: WO 2004/011558

(56) References cited:
- EP-A- 0 563 901
- EP-A- 0 950 696
- GB-A- 2 138 834
- US-A- 3 179 607
- DATABASE WPI Section Ch, Week 198904 Derwent Publications Ltd., London, GB; Class A18, AN 1989-027841 XP002263058 & JP 63 301263 A (PENTEL KK), 8 December 1988 (1988-12-08) cited in the application
- DATABASE WPI Section Ch, Week 200254 Derwent Publications Ltd., London, GB; Class A14, AN 2002-503724 XP002263059 & JP 2002 114931 A (SEKISUI CHEM IND CO LTD), 16 April 2002 (2002-04-16)
- DATABASE WPI Section Ch, Week 199145 Derwent Publications Ltd., London, GB; Class A14, AN 1991-329972 XP002263060 & JP 03 221571 A (NIPPON MONSANTO KK), 30 September 1991 (1991-09-30) cited in the application
- DATABASE WPI Section Ch, Week 200160 Derwent Publications Ltd., London, GB; Class A14, AN 2001-539481 XP002263061 & JP 2001 207102 A (PENTEL KK), 31 July 2001 (2001-07-31) cited in the application
- DATABASE WPI Section Ch, Week 200024 Derwent Publications Ltd., London, GB; Class A14, AN 2000-275640 XP002263062 & JP 2000 063728 A (SEKISUI CHEM IND CO LTD), 29 February 2000 (2000-02-29)
- DATABASE WPI Section Ch, Week 199141 Derwent Publications Ltd., London, GB; Class A14, AN 1991-298780 XP002263063 & JP 03 197511 A (SEKISUI CHEM IND CO LTD) , 28 August 1991 (1991-08-28)

## Description

The present invention relates to pigment ink containing water-soluble solvents for use in writing implements, recording, stamps and the like, and a solid pigment ink composition employed for preparing these. The wording "solvents" means "organic solvents" throughout the description.

In recent years, pigments, which are excellent in fastness, have been investigated for employing as colorant of writing-implement ink or of (industrial) ink-jet printing ink, instead of dyes. Pigments are, different from dyes, not soluble in a solvent, and it is important that pigment particles are stably dispersed in water or a solvent as fine particles. To improve dispersion of pigments in water or/and solvents and prevent sedimentation of pigments, the pigments have conventionally been dispersed with using a dispersing machine such as a sand-grinder or a ball-mill with various surfactants or binder resins in alone or combination.

The problems has also been noticed as that aromatic solvents such as xylene and toluene which have been used for writing-implement ink and (industrial) ink-jet printing ink are particularly harmful for human health and cause air-pollution. Therefore, it is desired to shift the aromatic solvents to alcohol solvents being more safe. What is particularly desired is, alcoholic pigment ink which is able to make advantage of good density, light-resistance and fastness of pigment written traces.

However, the viscosity required for writing and recording pigment ink is extremely lower than coating compositions and the like, and extremely high pigment dispersion is required. The conventional dispersing methods with using alcohol soluble resins, dispersants and pigment treatments may often be short of providing sufficient pigment dispersion for meeting the requirements. In addition, the pigment dispersion may change in particle size or viscosity with the passage of time because of desorption of dispersants or affinity deficiency between pigments and resins. Therefore, it has been very difficult to obtain desired pigment ink.

Improvements of alcohol soluble resins and pigment dispersing methods have been tried in order to solve the problems. Japanese Patent Kokai Publication No. S59(1984)-207975, for example, discloses ink made from a pigment containing binder which is prepared by mechanically kneading or melting polyvinyl butyral made of 65 to 85% by weight of polyvinyl acetal, 10 to 40% by weight of polyvinyl alcohol and 1 to 5% by weight of polyvinyl acetate with pigments. However, the resulting processed pigment is hard to dissolve, and relatively much insoluble matter remains. The resin would deteriorate by heat to become insoluble because high temperature is applied to during the melting step.

In Japanese Patent Kokai Publication No. S63(1988)-301263, pigments are treated with aluminum-type coupling agents in ethanol in a closed homomixer of anti-blast type, the ethanol is removed, then the pigments are dispersed by a conventional method with a dispersing machine using polyvinyl butyral or nitrocellulose. However, this method requires treatment in organic solvents, expensive equipments and solvent recovery, and cost for the products is too high for using practically.

In Japanese Patent Kokai Publication No. H3(1991)-221571, polyvinyl butyral, plasticizers and pigments are kneaded in a ratio of 100/15 to 50/20 to 80 with a roll or a batch kneader at 80 to 150°C. This method uses plasticizers in higher amount than that usually added to resins for coating compositions, plastics and ink, and it generally causes deterioration of coated film performances. The heating with a roll also inevitably makes polyvinyl butyral and pigments deteriorate and aggregate, and much insoluble matter is generated in coating compositions or in ink of solvent soluble type. Pigments disclosed in the publication have an average particle size of 1.7 to 3.5 um, and show high-grade transparency when employed as intermediate film of laminated glasses. It is well known to the art that pigments show transparency when particle size thereof is not more than half of visible light. Therefore, the described pigments would show transparency only with low pigment content in the very thin intermediate film.

Japanese Patent Kokai Publication No. H11(1999)-349889 discloses that printing ink or coating compositions may be reduced in viscosity, and be improved in handling when a resin, employed in which is that obtained by subjecting partially saponified polyvinyl alcohol to polyvinyl butyralation reaction. However, even though these types of polyvinyl butyral resins are employed, if they are dispersed with pigments after being dissolved in solvents, viscosity-increase or agglomerate would occur with the passage of time.

Japanese Patent Kokai Publication No. 2001-207102 describes an oil ink composition for a ball-point pen which contains polyvinyl butyral, and, as a solvent, dipropylene glycol mono-n-butyl ether and/or tripropylene glycol mono-n-butyl ether. This ball-point pen ink is relatively low viscous, but it is substantially difficult to remove insoluble matter by filtration or centrifugation from the dispersion having a viscosity of not less than hundreds mPa·s. Further, the dispersion is prepared by dissolving polyvinyl butyral in solvents by first, and dispersing pigments in the solution. Therefore, adsorption of the resin to pigments becomes insufficient, and the ball-point pen ink is poor in long term storage stability.

Resin compositions for inks and coatings containing polyvinyl acetal resin with specific degree of acetalization are disclosed in JP,A,2002,114,931. These compositions use a high and a low polymerisation degree polyvinyl alcohol.

Almost all of conventional solid pigments and commercially available processed pigments are prepared by drying and granulating a solvent dispersion, and they would have been subjected to a high temperature as being dried or granulated. Resins included therein may often be degraded thereby. Many of them have a millimeters cubic form, and require long time, for example 48 to 72 hours, for dissolving. Further, some commercially available products hardly dissolve even heating. Sometimes, the commercial solid pigments have not been dissolved perfectly to leave insoluble matter to the last and a step of removing the insoluble matter is required. The processed solid pigments of powder form may be available from the market. However, solubility thereof is not so good, and also insoluble matter may be left. Further, dispersing resins are required in an amount of not less than the amount of pigments for the sake of dispersion stability under the high temperature heating step. Therefore, the conventional solid processed pigments have not been employed for ink, viscosity of which has to be limited.

The inventors conducted investigation to solve the problems, as a result, they found a novel process for preparing a solid pigment composition for pigment ink. The pigment ink resulted from the process, employs water-soluble solvents (for example, alcohol solvent, glycol solvent or other nontoxic solvents), contains sufficient amount of pigments, has low concentration with good pigment dispersion and storage stability, and shows good writing or recording ability with improved color-development.

The present invention provides a process for preparing a solid pigment composition for pigment ink comprising the steps of:
(a) dissolving polyvinyl alcohol in water, and dispersing pigments in the resulting solution;
(b) adding aldehyde derivatives to the resulting pigment dispersion and allowing the polyvinyl alcohol to react with the aldehyde derivatives to prepare polyvinyl acetal; and
(c) drying the acetalated pigment dispersion.

Further, the present invention provides pigment ink containing the solid pigment composition for pigment ink, and a process for prep aring the same.

### Preparation of solid pigment composition for pigment ink

Polyvinyl alcohol is dissolved in water by first. The water employed as a solvent medium may optionally be mixed with a minor amount of water-soluble solvents. When water-soluble solvents are used, the amount is preferably not more than 10% by weight of total solvents (water plus water-soluble solvents).

The water-soluble solvents may be alcohols, glycols, derivatives thereof, pyrrolidone derivatives, lactate derivatives and the like. Examples thereof include alcohols such as benzyl alcohol, 1-octanol, 2-octanol and alpha-methylbenzyl alcohol, and glycols and their derivatives such as ethylene glycol, diethylene glycol, propylene glycol, hexylene glycol, benzyl glycol, ethylene glycol monophenyl ether (2-phenoxyethanol), dipropylene glycol monomethyl ether, dipropylene glycol monoethyl ether, dipropylene glycol monophenyl ether, diethylene glycol monophenyl ether, propylene glycol monophenyl ether, diethylene glycol monobutyl ether, dipropylene glycol monobutyl ether, tripropylene glycol monomethyl ether, tripropylene glycol monoethyl ether, propylene glycol methylether acetate, propylene glycol diacetate and the like. The water-soluble solvents may be employed in alone or in combination of two or more.

The polyvinyl alcohol is dissolved in water in a ratio by weight relative to water of from 1 to 30, preferably 5 to 15. If the ratio is less than 1, it becomes difficult to keep the dispersed pigments stable. If it is more than 30, it becomes difficult to disperse pigments due to increase of viscosity.

The polyvinyl alcohol may be selected from general products to specific products. Examples thereof include,
fully saponificated products DENKA POVAL K24E, K17E; moderately saponificated products DENKA POVAL H24, H12; partially saponificated products DENKA POVAL B33, B24T, B17R, B04 (all manufactured by Denki Kagaku K.K.),
fully saponificated products UNITIKA POVAL UF050G, UF200G, UV-2S; moderately saponificated products UNITIKA POVAL UF50MG, UF170M; partially saponificated products UNITIKA POVAL UP040G, UP 180 (all manufactured by Unitika K.K.),
fully saponificated products GOSENOL HN-26, N300, NL-05; moderately saponificated products GOSENOL AH-17, C-500, GM-14; partially saponificated products GOSENOL KH20, KL-05 (all manufactured by Nippon Gosei Kagaku K.K.),
fully saponificated products KURARAY POVAL PVA-102, PVA-105, PVA-CST; moderately saponificated products KURARAY POVAL PVA-617, PVA-706; partially saponificated products KURARAY POVAL BPVA-203, PVA-424H (all manufactured by Kuraray K.K.).

The polyvinyl alcohol may be those modified at terminal ends for various uses by etherification, esterification, epoxidation, isocyanatation, amination, sulfonatation, or alkylation, and may include various surfactants or water-soluble resins for pigment dispersion. These may be employed in alone or in combination of two or more. The polyvinyl alcohol has an average polymerization degree of preferably from 100 to 5000, more preferably from 200 to 3000.

Various surface active agents or water-soluble resins may separately be added to as dispersing step is conducted.

Pigments are then dispersed in the resulting aqueous polyvinyl alcohol solution. The pigments may be any of conventional organic pigments, inorganic pigments, extender pigments and the like. Examples thereof include,
organic pigments of such types as phthalocyanine, azo, condensed azo, azo lake, anthraquinone, perynone-perylene, quinophthalone, isoindoline, indigo-thioindigo, isoindolinone, azomethineazo, metal complex salt azomethine, dioxazine, quinacridone, aniline black, triphenylmethane, acidic dye lake, basic dye lake, alkaline blue;
inorganic pigments of such types as carbon black, titanium oxide, iron oxide, iron hydroxide, chromium oxide, spinel-type sintered pigments, lead chromate, vermilion chromate, iron blue, aluminum powder, bronze power;
extender pigments of such types as, calcium carbonate, barium sulfate, silicon oxide, aluminium hydroxide.

More specific examples of the pigments include yellow pigments such as C.I. Pigment Yellow 1 (Hansa Yellow G), 2, 3 (Hansa Yellow 10G), 4, 5 (Hansa Yellow 5G), 6, 7, 10, 11, 12 (Disazo Yellow AAA), 13, 14, 16, 17, 24 (Flavanthrone Yellow), 55 (Disazo Yellow AAPT), 61, 61:1, 65, 73, 74 (Fast Yellow 5GX), 75, 81, 83 (Disazo Yellow HR), 93 (Condensation Azo Yellow 3G), 94 (Condensation Azo Yellow 6G), 95 (Condensation Azo Yellow GR), 97 (Fast Yellow FGL), 98, 99 (Anthraquinone), 100 (Tartrazine Yellow Lake), 108 (Anthrapyrimidine Yellow), 109 (Isoindolinone Yellow 2GLT), 110 (Isoindolinone Yellow 3RLT), 113, 115 (Quinoline Yellow Lake), 117 (Copper Azo Methine Yellow), 120 (Benzimidazolone Yellow H2G), 123 (Anthraquinone Yellow), 124, 128 (Condensation Azo Yellow 8G), 129, 133, 138 (Quinophthalone Yellow), 139 (Isoindolinone Yellow), 147, 151 (Benzimidazolone Yellow H4G), 153 (Nickel Nitroso Yellow), 154 (Benzimidazolone Yellow H3G), 155, 156 (Benzimidazolone Yellow HLR), 167, 168, 172, 173 (Isoindolinone Yellow 6GL), 180 (Benzimidazolone Yellow);
orange pigments such as C.I. Pigment Orange 1, 2, 5, 7, 13, 14, 15, 16 (Vulcan Orange), 24, 31 (Condensation Azo Orange 4R), 34, 36 (Benzimidazolone Orange HL), 38, 40 (Pyranthrone Orange), 42 (Isoindolinone Orange RLT), 43, 51, 60 (benzimidazolone-type insoluble monoazo pigment), 62 (benzimidazolone-type insoluble monoazo pigment);
red pigments such as C.I. Pigment Red 1 (Para Red), 2, 3 (Toluidine Red), 4, 5 (ITR Red), 6, 7, 8, 9, 10, 11, 12, 14, 15, 16, 17, 18,19,21, 22, 23, 30, 31, 32, 37, 38 (Pyrazolone Red B), 40, 41, 42, 53:1 (Lake Red C), 81 (Rhodamine 6G Lake), 83 (Madder Lake), 88 (Thioindigo Bordeaux) 112 (Naphthol Red FGR), 114 (Brilliant Carmine BS), 122 (dimethyl quinacridone), 123 (Perylene Vermilion), 144 (Condensation Azo Red BR), 146, 149 (Perylene Scar Red), 150, 166, 168 (Anthoanthrone Orange), 170 (Naphthol Red F5RK), 171 (Benzimidazolone Maroon HFM), 174 (Phloxine B Lake), 175 (Benzimidazolone Red HFT), 176 (Benzimidazolone Carmine HF3C), 177, 178 (Perylene Red), 179 (Perylene Maroon), 180 (Isoindolinone Red 2BLT), 185 (Benzimidazolone Carmine HF4C), 187, 188, 189 (Perylene Red), 190 (Perylene Red), 194 (Perynone Red), 202 (Quinacridone Magenta), 209 (Dichloroquinacridone Red), 214 (Condensation Azo Red), 216, 219, 220 (Condensation Azo), 224 (Perylene Red), 242 (Condensation Azo Scar Red) 245 (Naphthol Red), 254;
purple pigments such as C.I. Pigment Violet 5:1 (Alkaline Blue), 19 (Quinacridone), 23 (Dioxane Violet), 31, 32, 33, 36, 38, 43, 50;
blue pigments such as C.I. Pigment Blue 1 (Bichlothia Pure Blue BO lake), 15, 15:1, 15:2, 15:3, 15:4, 15:6 (all being Phthalocyanine Blue), 16 (Nonmetallo Phthalocyanine Blue), 17:1, 18 (Alkaline Blue Toner), 19, 21, 22, 24 (Bichlothia Pure Blue BO Lake), 25 (Dianisidine Blue), 56, 60 (Threne Blue), 64 (Dichloroindanthlone Blue), 65 (Violanthrone), 66 (Indigo);
black pigments such as C.I. Pigment Black 1 (Aniline Black), C.I. Pigment Black 7 (carbon black such as Furnace Black, Lamp Black, Acetylene Black and Channel Black);
green organic pigments such as C.I. Pigment Green 7 (Phthalocyanine Green), 10 (Green Gold), 36 (Chlorobromophthalocyanine Green), 37, 47 (Violanthrone Green);
brown organic pigments such as C.I. Pigment Brown 1, 2, 3, 5, 23 (Condensation Azo Brown 5R), 25 (Benzimidazolone Brown HFR), 26 (Perylene Bordeaux), 32 (Benzimidazolone Brown HFL).

These pigments may be employed in alone or in combination of two or more.

The pigments are employed in an amount so that ratio by weight of the polyvinyl alcohol to the pigment is from 0.1/1 to 10/1, preferably 0.5/1 to 5/1. The ratio of this range provides mixture particles of the pigments and the resins in which the pigments bind sufficiently to polyvinyl acetal after conducting the following acetalation reaction.

The pigments are dispersed by, for example, grinding pigments in a polyvinyl alcohol aqueous solution. The grind of pigments is preferably conducted with a dispersing machine. Examples of the dispersing machine include a ball mill, an attritor, a flow-jet mixer, an impeller mill, a colloidal mill, a homo mixer, a beads mill, a high speed disper, sand mills (e.g., a beads mill, a sand grinder, a super mill, an agitator mill, DYNO MILL™, FILL MIX™, MICRO FLUIDIZER™, EBARA MILDER™).

Mill media may be employed for the dispersing procedure. The materials, with which the mill media is made, are not limited to, for example beads made with glass, stainless steel, zirconia and the like.

The mill media are preferably filled in an amount of 50 to 95% by volume of the mill capacity. The mill media can be removed with coarse particles by the treatment of filtration or centrifugation.

Dissolving polyvinyl alcohol in water, and dispersing pigments may be conducted at once or independently. They may be conducted in the reverse order.

The pigments are preferred to be controlled in their particle size precisely so that the pigment ink resulted from the solid pigment composition for pigment ink, shows smooth writing and stable jetting without clogging. When the pigments are dispersed, the pigment particles contained in the dispersion should be adjusted to preferably not more than 500 nm, more preferably 300 nm, most preferably 200 nm in average particle size.

The pigment dispersion obtained as described above are then subjected to acetalation treatment. The acetalation treatment may be conducted by adding aldehyde derivatives to the pigment dispersion, and allowing the polyvinyl alcohol and the aldehyde derivatives to react. This treatment may be conducted with reaction methods and reaction apparatuses which are conventional to obtaining polyacetal from polyvinyl alcohol, e.g., with a dispersing machine.

A further purifying step, comprising removing impurities and produced salts from the pigment dispersion might be added.

The aldehyde derivatives may be those usually employed for acetalation of polyvinyl alcohol. Examples include aliphatic aldehydes such as formaldehyde, acetaldehyde, propyl aldehyde, butyl aldehyde, 2-ethylbutyl aldehyde, hexyl aldehyde, octyl aldehyde, decyl aldehyde, dodecyl aldehyde;
aliphatic cyclic aldehydes such as cyclohexane aldehyde, trimethylcyclohexane aldehyde, dimethylcyclohexane aldehyde, methylcyclohexane aldehyde, cyclopentane aldehyde, methylcyclopentane aldehyde, decahydro-beta-naphthyl aldehyde, cyclohexane acetaldehyde, alpha-camphorene aldehyde, 3-methylcyclohexene aldehyde;
aromatic aldehydes such as benzaldehyde, phenylacetaldehyde, phenylpropylaldehyde, methylbenzylaldehyde, dimethylbenzaldehyde, trimethylbenzaldehyde, naphthylaldehyde;
heterocyclic aldehydes such as furfural, 5-methylfurfral.

These may be employed in alone or in combination of two or more. Preferred are aliphatic or aromatic aldehyde derivatives having 1 to 12 carbon atoms such as butyl aldehyde, propyl aldehyde, hexyl aldehyde, cyclohexyl aldehyde, benzaldehyde as solubility to the solvents is taken into consideration.

After the acetalation treatment is conducted, mixture grains or granules made of pigments and polyvinyl acetal are formed in water because polyvinyl acetal having an acetalation degree of not less than 50% is poor in water solubility. In order to obtain the grains of good and uniform pigment dispersion condition, it is preferred that the acetalation reaction is conducted in a diluted state so that ratio by weight of the pigments to water is from 1/100 to 1/10, preferably from 1/50 to 1/10, more preferably from 1/20 to 1/10.

It is preferred that the mixture grains made of pigments and polyvinyl acetal are adjusted to have an average grain size of from 0.5 to 3.0 mm, preferably 1 to 2.5 mm, thereby a solid pigment composition for pigment ink having good solubility to the water-soluble solvents is obtained.

Reaction temperature to be employed for conducting the acetalation reaction is determined mainly by the classes of employed solvents, aldehyde derivatives which are raw materials, catalysts and the like, and not limited to, preferably 0 to 80°C, more preferably 10 to 40°C. However, lower temperature such as 0 to 10°C may be employed. Reaction time is generally from 1 to 48 hours.

The acetalation reaction is preferably conducted in the presence of acidic catalysts. Inorganic acids such as hydrochloric acid and sulfonic acid, and organic acids such as formic acid, acetic acid and p-toluene sulfonic acid are suitably employed as the acidic catalysts. Particularly preferred acids are hydrochloric acid and sulfonic acid. The acidic catalysts may be employed in alone or in combination of two or more. Concentration of the acidic catalysts may be selected from a broad range of from 0.02% to 10% by weight relative to the solvents. If concentration of the acidic catalysts is less than 0.02% by weight, proton donating ability as catalysts becomes poor. Whereas even if it is more than 10% by weight, additional effects as catalysts becomes poor and uneconomical.

On conducting the reaction, convenient additives, such as dispersants for preventing fusion of particles, surfactants and the like may be employed.

In the acetalation treatment, polyvinyl alcohol may be adjusted in acetalation degree by controlling amount of the aldehyde derivatives. The polyvinyl acetal preferably has an acetalation degree of not less than 50%, more preferably not less than 60%, most preferably not less than 70%. Other classes of substituents may be introduced in a part of hydroxyl groups of the polyvinyl alcohol.

Thereafter, a step of removing impurities and salts which have been generated may be conducted. For example, a step of removing unreacted aldehyde derivatives and disused acid catalysts by filtering or washing, a step of removing unreacted polyvinyl alcohol, a step of removing generated salts, and the like may be conducted. It is efficient for obtaining pigment dispersed ink which has good storage stability to remove impurities and generated salts.

A step of adjusting pH by using neutralizing agents such as potassium hydroxide, sodium hydroxide, sodium hydrogen-carbonate, sodium carbonate, ammonia and the like, may optionally be employed.

The acetalated pigment dispersion is then dried to obtain the solid pigment composition for pigment ink. The drying step may be conducted by heating to a temperature at which the resin components contained in the pigment dispersion such as the polyvinyl acetal do not deteriorate. The heating temperature is specifically 30 to 80°C, preferably 40 to 60°C. When the solid pigment composition for pigment ink is used for preparing nonaqueous pigment ink, it is preferred that drying is further conducted under the reduced pressure to further remove moisture contained in the solid pigment composition.

Resins other than the polyvinyl alcohol may be employed in preparation of the solid pigment composition for pigment ink. The specific resins are, for example, proteins such as gelatin and casein, natural rubber such as gum arabic, glucoxides such as saponin, cellulose derivatives such as methyl cellulose, carboxymethyl cellulose and hydroxymethyl cellulose, natural polymers such as lignin sulfonate salt and shellac, ionic polymers such as polyacrylate salt, polyacrylamide, styrene-acrylic acid copolymer salt, vinylnaphthalene-acrylic acid copolymer salt, styrene-maleic acid copolymer salt, vinylnaphthalene-maleic acid copolymer salt, sodium salt of beta-naphthalene sulfonic acid formalin condensate and polyphosphoric acid, nonionic polymers such as polyvinyl butyral, polyethylene glycol, polypropylene glycol, polyethylene oxide, polyvinyl methyl ether, and the like. When water-soluble solvents are present in substantial ratio, the resins soluble in the water-soluble solvents such as ketone resins, ester gum, xylene resins, alkyd resins, phenol resins, terpene phenol resins, polyvinyl pyrrolidone, maleic acid resins, rosin modified maleic acid resins, rosin modified fumaric acid resins, and acrylic resins. Otherwise, low water-soluble or water-insoluble resin may be included in the form of emulsion.

Dispersants may be employed in preparation of the solid pigment composition for pigment ink. The dispersants are employed for dispersing the pigments in water by adsorbing on a surface of the pigments, and nonionic or anionic surfactants, or water-soluble polymers are usually exemplified. As the nonionic surfactants, polyoxyalkylene higher fatty esters, higher fatty partial esters of polyhydric alcohols, higher fatty esters of sugar and the like. Specifically, fatty ester of glycerol, polyglycerin fatty ester, propylene glycol fatty ester, pentaerythritol fatty ester, polyoxyethylene sorbitan fatty ester, polyoxyethylene sorbit fatty ester, polyoxyethylene glycerin fatty ester, polyethylene glycol fatty ester, polyoxyethylene alkyl ether, polyoxyethylene phytosterol, polyoxyethylene polyoxypropylene alkyl ether, polyoxyethylene alkyl phenyl ether, polyoxyethylene castor oil, polyoxyethylene lanolin, polyoxyethylene lanolin alcohol, polyoxyethylene alkylamine, polyoxyethylene fatty amide, formaldehyde condensate of polyoxyethylene alkylphenyl are exemplified. The resins may be used as dispersants.

In preparation of the solid pigment composition for pigment ink, various kinds of conventional additives such as surfactants, surfacetension adjusters, wetting agents, viscosity adjusters, pH adjusters, antiseptic agents, antirust agents, in addition to the above described blending components, may suitably be incorporated within the objectives of the present invention.

In preparation process of the present invention, polyvinyl alcohol which is water-soluble, is dissolved in water, pigments are dispersed in the resulting solution, thereafter aldehyde derivatives are allowed to react with the polyvinyl alcohol to provide water-insoluble resins (polyvinyl acetal, e.g., polyvinyl butyral). The polyvinyl alcohol dissolved in water would cover surfaces of pigments in the pigment dispersion. The acetalation reaction under this condition should make the resulting polyvinyl acetal adsorb the pigments firmly.

### Preparation of pigment ink

The pigment ink of the present invention is ink which contains above described solid pigment composition for pigment ink and water-soluble solvents. The pigment ink may be prepared by a conventional method. A typical preparation method is the process which comprises a step of mixing and dispersing a composition containing the solid pigment composition for pigment ink and water-soluble solvents.

The method for preparation of ink by using the solid pigment composition for pigment ink of the present invention, is far more easy to conduct than the conventional method which is typically conducted by making pigments directly dispersed in solvents. It is possible to use various kinds of mills or dispersing machines, or to select appropriate dispersing beads to obtain the ink which is suitable for a specific use or which has stable and fine dispersion condition.

Mixing, dispersing and grinding steps may be conducted by using dispersing machines, for example, a ball mill, an attritor, a flow-jet mixer, an impeller mill, a colloidal mill, a homo mixer, a beads mill, a high speed disper, sand mills (e.g., a beads mill, a sand grinder, a super mill, an agitator mill, DYNO MILL™, FILL MIXER™, MICRO FLUIDIZER™, EBARA MILDER™). Mill media may be employed in the steps. The materials, with which the mill media is made, are not limited to, for example beads made with glass, stainless steel, zircon, zirconia and the like. The mill media are preferably filled in an amount of 50 to 95% by volume relative to the mill capacity.

Examples of solvents to be employed preferably in the pigment ink of the present invention include:
monohydric alcohols, e.g., lower alcohols such as methanol, ethanol, n-propanol, iso-propanol and n-butanol; monoalkyl ethers of diols such as ethylene glycol monomethyl ether, ethylene glycol monoethyl ether, propylene glycol monoethyl ether, diethylene glycol monoethyl ether, diethylene glycol monobutyl ether, dipropylene glycol monoethyl ether; monoacetates of diols such as ethylene glycol monoacetate and propylene glycol monoacetate; aromatic alcohols such as benzyl alcohol; and alicyclic alcohols such as cyclohexanol;
dihydric alcohols, e.g., glycols such as ethylene glycol, diethylene glycol, trimethylene glycol, triethylene glycol, polyethylene glycol, propylene glycol, and butane diol;
trihydric alcohols, e.g., glycerol, trimethylol propane, 1,2,6-hexane triol;
dioxane; lactates such as methyl lactate, ethyl lactate, butyl lactate; pyrrolidones such as N-(2-hydroxyethyl)-2-pyrrolidone, N-methyl-2-pyrrolidone.

Linear or branched aliphatic hydrocarbons such as n-hexane, n-heptane, octane; alicyclic hydrocarbons such as cyclohexane; aromatic hydrocarbons such as toluene, xylene and halogen substituents thereof; ketones such as acetone, methyl ethyl ketone, methyl isobutyl ketone; esters such as ethyl acetate, butyl acetate and the like may be employed in combination the water-soluble solvents depending on use of the pigment ink. The solvents may be employed in alone or in combination of two or more.

Preferred mixing ratio of the solid pigment composition for pigment ink and the solvents may widely vary depending on use of the prepared pigment ink. For example, when pigment ink for ink-jet ink is prepared, from 3/97 to 10/90 is preferred for the mixing ratio of the solid pigment composition for pigment ink and the solvents. When pigment ink for marking pens is prepared, from 5/95 to 30/70 is preferred for the mixing ratio of the solid pigment composition for pigment ink and the solvents. When pigment ink for writing boards is prepared, from 5/95 to 10/90 is preferred for the mixing ratio of the solid pigment composition for pigment ink and the solvents. When pigment ink for paint markers is prepared, from 20/80 to 50/50 is preferred for the mixing ratio of the solid pigment composition for pigment ink and the solvents. When pigment ink for solid correction agents is prepared, from 40/60 to 80/20 is preferred for the mixing ratio of the solid pigment composition for pigment ink and the solvents.

When pigment ink for coating compositions is prepared, from 10/90 to 30/70 is preferred for the mixing ratio of the solid pigment composition for pigment ink and the solvents.

Resins different from the polyvinyl acetal in the solid pigment composition for pigment ink may be added to the pigment ink, e.g., as pigment dispersing resins, in order to improve fixation of written traces, to adjust viscosity, and to stabilize pigment dispersion. Resins which are soluble in single or mixture of the water-soluble solvents may be used as pigment dispersing resins. Examples thereof include resins or oligomers conventionally employed as the pigment dispersing resins, such as polyvinyl butyral resins, ketone resins, ester gum, xylene resins, alkyd resins, phenol resins, terpene-phenol resins, polyvinyl pyrrolidone, maleic acid resins, rosin modified maleic acid resins, rosin modified fumaric acid resins, acrylic resins, styrene-acryl resins, styrene-maleic acid resins, terpene-maleic acid resins, terpene resins, phenol modified xylene resins. The pigment dispersing resins may be employed in alone or in combination of two or more. The resins may be employed as dispersing agents. The resins are blended in a range of from 5 to 40% by weight, preferably 10 to 30% by weight relative to the whole amount of the pigment dispersion to improve pigment dispersion condition or to adjust viscosity suitably.

Various additives may be added to the pigment ink of the present invention to prepare various kinds of ink having desired properties. Examples of the additives include erasing agents, anti-oxidants, UV absorbers, surfacetension adjusters, wetting agents, viscosity adjusters, pH adjusters, lubricants, antiseptic agents, anti-mold agents, anti-corrosive agents, dispersants, rheology control agents, anti-drying agents. The nonionic or anionic surface active agents or water-soluble polymers may be employed for the dispersants.

Preferred examples of the erasing agents include esters of saturated fatty acids having 8 to 18 carbon atoms and saturated aliphatic alcohols having 4 to 20 carbon atoms such as ester compounds selected from monoalcohol esters of aliphatic monobasic acids, glycol ether esters of aliphatic monobasic acids, aliphatic dibasic acid diesters, glycol ether diesters of aliphatic dibasic acids and the like; higher hydrocarbons, higher alcohols, polyoxyethylene ether phosphorates, polyoxyethylene ether sulfates, polyoxypropylene polyoxyethylene block copolymers, polyoxyethylene ethers, and polyoxyethylene esters.

Specific examples of the monoalcohol esters of aliphatic monobasic acids include myristyl caproate, isostearil caproate, isostearil caprylate, oleyl caprylate, cetyl 2-ethylhexyl hexanoate, stearyl 2-ethyl hexanoate, oleyl 2-ethyl hexanoate, isooctadecyl caprylate, butyl palmitate, isooctyl palmitate, butyl stearate, isooctyl stearate, lauryl oleate and the like. Specific examples of the glycol ether esters of aliphatic monobasic acids include 2-ethoxyethyl palmitate, 2-butoxyethyl palmitate, 2-ethoxyethyl stearate and the like. Specific examples of the aliphatic dibasic acid diesters include dibutyl adipate, dioctyl adipate, dioctyl azelate, dibutyl sebacate, dioctyl dodecane dioate and the like. Specific examples of glycol ether diesters of aliphatic dibasic acids include bis(2-ethoxyethyl) adipate, bis(2-butoxyethyl) adipate, bis(2-ethoxyethyl) sebacate, triethylene glycol monobutyl ether diester of sebacic acid and the like.

The pigment ink of the present invention contains, as main solvents, water-soluble solvents such as alcohols and glycolethers, and is excellent in safety, low-pollution, storage stability and fastness of written traces. Further, by using the solid pigment composition for pigment ink of the present invention, pigment ink which is uniformly and finely dispersed, and has high coloring ability and high concentration, may be obtained. The ink may be used as pigment ink suitable for various uses such as pigment ink for writing implements such as marking pen ink, writing board ink, correction fluid and correction solid and the like, (industrial) ink-jet recording pigment ink, stamp pigment ink, various coating compositions (e.g. for wood coating) and the like.

Ink-jet recording pigment ink which contains the solid pigment composition for pigment ink of the present invention is applicable to high quality and high speed printing which has recently been required for ink-jet recording process. The ink-jet recording pigment ink may be printed on absorptive-surface materials such as paper, non-absorptive-surface materials such as metal, plastic and coated materials. Specific advantages are that no viscosity-increase of ink nor agglomerate of pigments occurs; jetting stability or jetting response of an ink-jet printer are not impaired; recording property is good; high-speed printing is conducted without printing unevenness; stability with the preservation of long time is excellent; and printed image with clarity and high quality is obtained. Furthermore, the printed characters and images are excellent in fastness, and colorant does not flow out even though immersed into water. Therefore, the pigment ink is very suitable for ink-jet printing pigment ink.

Marking pen pigment ink which contains the solid pigment composition for pigment ink of the present invention, does not form agglomerate nor sedimentation of pigments with the passage of time, and is writable smoothly for long term with a pen having a fine felt point. Further, hue and written traces are good, and written matters show high quality.

Ball-point pen pigment ink which contains the solid pigment composition for pigment ink of the present invention, does not form agglomerate, coarse, sedimentation of pigments, does not increase itself in viscosity, does not make a penpoint clogged, and is excellent in dispersion stability with the passage of time.

Writing board (so called, white board) ink which contains the solid pigment composition for pigment ink of the present invention, shows good erasing ability even when written on whatever writing boards (a vitreous enamel board, a resin board, a metal board and the like), initially or with the passage of time, does not left writing mark after being erased with the passage of time, that is good in anti-coloring property. Further, the writing board ink is good in stability, therefore, even if a pen-point was dried by cap removal, the written traces therewith do not become scratchy on condition that the pen-point is being capped for a few hours.

Coating compositions which contain the solid pigment composition for pigment ink of the present invention, do not form agglomerate nor sedimentation of pigments, that are excellent in stability with the passage of long time, and are applicable to form uniform, tough and strong-adhesive coating without making cracks nor separations.

### Effects of the Invention

Technical advantages of the present invention are as follows:
(1) The process for preparing a solid pigment composition for pigment ink of the present invention is conducted under aqueous circumstances without using water-soluble solvents. So there is no need for expensive production apparatuses of the blast prevention type, production steps can be conducted safely and smoothly, and the resulting solid pigment composition for pigment ink need not to be treated nor stored as the hazardous materials.
(2) The solid pigment composition for pigment ink is stable solid, shows little transformation such as agglomerate, involves good advantage industrially for long term storage and for handling.
(3) The solid pigment composition for pigment ink of the present invention is prepared by dissolving polyvinyl alcohol which is a water-soluble resin in water, dispersing pigments in the resulting solution, and thereafter, the polyvinyl alcohol, which is thought to cover a pigment surface in the pigment dispersion, is allowed to react with an aldehyde derivative to prepare a water-insoluble resin (polyvinyl acetal, e.g., polyvinyl butyral). Therefore the polyvinyl acetal resulted from the reaction would adsorb itself onto the pigments firmly as if it encapsulates pigment particles. As a result, it becomes possible to stabilize a pigment dispersion with a reduced amount of resins relative to pigments. Thereby secondary agglomerate and the like are prevented to occur, and uniform dispersing becomes easy to conduct.
   The solid pigment composition for pigment ink of the present invention preferably contains the polyvinyl acetal in a ratio by weight relative to the pigments of from 0.05/1 to 3/1.
(4) The acetalation reaction employed in the present invention may be conducted easily at low temperature. Therefore, resins or colorants are not degraded, and only few impurities are generated.
(5) The solid pigment composition for pigment ink of the present invention is obtained in fine granular form without using a specific apparatus for granulation. The solid pigment composition does not block even after drying step, without need of a grinding step nor a granulation step.
(6) The solid pigment composition for pigment ink of the present invention has a form of granule. Therefore, as it is employed for preparing various kinds of pigment ink, fine powder does not scatter, easily dispersible in an alcoholic water-soluble solvent, good in dispersion stability of pigments in ink (storage stability), and no insoluble matter is left.

The following Examples further illustrate the present invention in detail but are not to be construed to limit the scope thereof. In the Examples, "parts" is relative to weight unless otherwise stated.

The abbreviation "PVA" means polyvinyl alcohol, and "PVB" means polyvinyl butyral.

### Examples

### Example 1

### 1) PVA dissolution and pigment dispersing step

15 parts of PVA having a polymerization degree of 200 and a saponification degree of 88% were dissolved in 121 parts of ion-exchanged water, 30 parts of carbon black having a primary particle size of 25 nm, pH of 2.5, and a DBP absorption of 72 were added thereto, and stirred with a dissolver. The resultant was dispersed until being 150 nm with a horizontal-type beads mill, 134 parts of ion-exchanged water were added thereto to obtain a pigment dispersion having a pigment concentration of 10%.

### 2) Acetalation step

200 parts of the pigment dispersion of (1) were diluted with 400 parts of ion-exchanged water, temperature was adjusted to 25°C, 12 parts of 35% hydrochloric acid and 10 parts of butyl aldehyde were added at once thereto, and allowed the mixture to react under stirring at 200 rpm at 28°C for 24 hours. After completion of the reaction, the reactant was adjusted to pH 9 with 20% sodium hydroxide and stirred for 1 hour to finalize the reaction. This was filtered, washed with ion-exchanged water, and dried at 40°C. 36 parts of a granular solid pigment composition for pigment ink was obtained.

### 3) Ink formation (Preparation of Marking Pen Pigment Ink)

15 parts of the solid pigment composition for pigment ink of (2) were dispersed with allowing the resin to dissolve in 85 parts of n-propanol over 1 hour. No insoluble matter was found at this stage. The pigment ink had an average particle size of 155 nm and a viscosity of 10 mPa·s. The resulting pigment ink was loaded to a marking pen and conducted writing. The written traces was shown to be high density and the writing feeling was excellent. This pigment ink was allowed to stand at 50°C for 1 month in order to conduct the storage test. After the storage, it had an average particle size of 148 nm and a viscosity of 9.5 mPa·s, and good storage stability was shown.

### Comparative Example 1

Marking pen pigment ink was prepared according to substantially the same manner as described in Example 1, except that a commercially available processed pigment AS BLACK 810 manufactured by Fuji Shikiso K.K. was used instead of the solid pigment composition for pigment ink of (2). Much insoluble resin was left in the resulting ink even though stirring was conducted for three days. This was filtered with a wire net of 400 mesh. The filtrate dispersion had an average particle diameter of 197 nm and a viscosity of 5.1 mPa·s. The pigment ink was allowed to stand at 50°C for 1 month. After the storage, it had an average particle size of 170 nm and a viscosity of 5.6 mPa·s, and sedimentation was found at the bottom.

### Example 2

### 1) PVA dissolution and pigment dispersing step

10 parts of an acrylic dispersing resin solution (solid concentration of 36%) and 21 parts of PVA having a polymerization degree of 300 and a saponification degree of 99% were dissolved in 105 parts of ion-exchanged water, 30 parts of red pigment (C.I. Pigment Red 254) were added thereto, and stirred with a dissolver. The resultant was dispersed until being 200 nm with a horizontal-type beads mill, 134 parts of ion-exchanged water were added thereto to obtain a pigment dispersion having a pigment concentration of 10%.

### 2) Acetalation step

200 parts of the pigment dispersion of (1) were diluted with 380 parts of ion-exchanged water, temperature was adjusted to 25°C, 4 parts of 98% sulfuric acid, 20 parts of 80% acetic acid, 9.5 parts of butyl aldehyde, 0.5 parts of propyl aldehyde were added thereto, and allowed the mixture to react under stirring at 200 rpm at 20°C for 1 hour. The reaction was further continued at 28°C for 20 hours, the reactant was adjusted to pH 9 with 20% sodium hydroxide and stirred for 1 hour to finalize the reaction. This was filtered, useless acrylic resins were washed out, washed with ion-exchanged water, and dried at 40°C. 38 parts of a granular red solid pigment composition for pigment ink was obtained.

### 3) Ink formation (Preparation of Writing Board Pigment Ink)

5.5 parts of the solid pigment composition for pigment ink of (2) were dispersed with allowing the resin to dissolve in 70 parts of methanol and 14.5 parts of isopropanol over 3 hours. No insoluble matter was found at this stage. 7 parts of isobutyl stearate, 2 parts of sucrose ester, and 1 part of polyoxyethylene alkylether phosphate were added to this to obtain white board pigment ink.

The pigment ink had an average particle size of 204 nm and a viscosity of 6.5 mPa·s. The resulting pigment ink was loaded to a white board writing pen and conducted writing on a board. The written traces was shown to be high density, and the writing feeling and the erasing ability was excellent. This pigment ink was allowed to stand at 50°C for 1 month in order to conduct the storage test. After the storage, it had an average particle size of 208 nm and a viscosity of 6.7 mPa·s, and no sedimentation was found.

### Comparative Example 2

50 parts of DENKA BUTYRAL 2000-L manufactured by Denki Kagaku K.K. were dissolved in 750 parts of ethanol and 130 parts of isopropanol, 70 parts of red pigment (C.I. Pigment Red 254) were added thereto, and this was dispersed until being 200 nm with a horizontal-type beads mill.

43.5 parts of the pigment dispersion were dispersed with allowing the resin to dissolve in 39.5 parts of methanol and 7 parts of isopropanol over 3 hours. No insoluble matter was found at this stage. 7 parts of isobutyl stearate, 2 parts of sucrose ester, and 1 part of polyoxyethylene alkylether phosphate were added to this to obtain white board pigment ink.

The pigment ink had an average particle size of 210 nm and a viscosity of 8.0 mPa·s. The writing feeling and the erasing ability were fair. This pigment ink was allowed to stand at 50°C for 1 month in order to conduct the storage test. After the storage, it had an average particle size of 255 nm and a viscosity of 9.2 mPa·s, and sedimentation and agglomerate were found.

### Example 3

### 1) PVA dissolution and pigment dispersing step

18 parts of alkyl modified PVA having a polymerization degree of 300 and a saponification degree of 88% were dissolved in 118 parts of ion-exchanged water, 30 parts of blue pigment (C.I. Pigment Blue 15:6) were added thereto, and stirred with a dissolver. The resultant was dispersed until being 180 nm with a horizontal-type beads mill, 134 parts of ion-exchanged water were added thereto to obtain a pigment dispersion having a pigment concentration of 10%. The pigment dispersion was subjected to centrifugation at 10000 rpm and 10000 G for 15 minutes to remove coarse particles.

### 2) Acetalation step

200 parts of the pigment dispersion of (1) were diluted with 340 parts of ion-exchanged water, temperature was adjusted to 10°C, 12 parts of 35% hydrochloric acid, 60 parts of methanol, 10 parts of butyl aldehyde were added thereto, and allowed the mixture to react under stirring at 200 rpm at 5°C for 24 hours. The reaction was further continued at 30°C for 2 hours. The reactant was adjusted to pH 9 with 20% sodium hydroxide and stirred for 1 hour to finalize the reaction. This was filtered, washed with ion-exchanged water, and dried at 40°C. 34 parts of a granular blue solid pigment composition for pigment ink was obtained.

### 3) Ink formation (Preparation of Ball-point Pen Pigment Ink)

25 parts of the solid pigment composition for pigment ink of (2) and 7 parts of a ketone resin were dispersed with allowing the resin to dissolve in 12 parts of benzyl alcohol and 60 parts of 2-phenoxyethanol at 80°C over 1 hour to obtain pigment ink having a pigment concentration of 14%. No insoluble matter was found at this stage.

The pigment ink had a viscosity of 2500 mPa·s and an average particle size of 183 nm. The viscosity was thereafter adjusted to 8000 to 10000 mPa·s with employing polyvinyl pyrrolidone as a viscosity adjusting resin.

The resulting pigment ink was loaded to a ball-point pen and conducted writing. The writing feeling was smooth without forming inkdrop, and was excellent. The ball-point pen was allowed to stand at 50°C with 100% humidity for 1 month in order to conduct the storage test. After the storage, the writing feeling was smooth, and the ink had an average particle size of 188 nm.

### Comparative Example 3

130 parts of a polyvinyl butyral resin S-LEC BL1 manufactured by Sekisui Kagaku K.K. were dissolved in 140 parts of benzyl alcohol and 530 parts of 2-phenoxy ethanol, 200 parts of blue pigment (C.I. Pigment Blue 15:6) were added thereto, and this was stirred with a dissolver and dispersed until being 180 nm with a horizontal-type beads mill.

8 parts of benzyl alcohol and 22 parts of 2-phenoxy ethanol were added to 70 parts of the pigment dispersion to obtain pigment ink having a pigment concentration of 14%.

The pigment ink had a viscosity of 2000 mPa·s and an average particle size of 185 nm. The viscosity was thereafter adjusted to 8000 to 10000 mPa·s with employing polyvinyl pyrrolidone as a viscosity adjusting resin.

The pigment ink was spread on a piece of art paper with a bar-coater and dried. This was measured in color density with a color-difference meter SPECTRO COLOR METER SE 2000 manufactured by Nippon Denshoku K.K. It was found that this ink only had a color density of 92% relative to the ink of Example 3.

The ink was loaded to a ball-point pen and conducted writing. The writing feeling was fair. The ball-point pen was allowed to stand at 50°C with 100% humidity for 1 month in order to conduct the storage test. After the storage, it became impossible to write. The ink had an average particle size of 280 nm.

### Example 4

### 1) PVA dissolution and pigment dispersing step

500 parts of specific PVA, which has sulfonic groups and carboxylic groups in the structure to improve dispersing ability, and has a polymerization degree of 200 and a saponification degree of 97% were dissolved in 3500 parts of ion-exchanged water, 1000 parts of titanium oxide TIPAQUE R-820 manufactured by DuPont Co. were added thereto, and stirred. The resultant was dispersed until being 0.25 um with EBARA MILDER.

### 2) Acetalation step

200 parts of the pigment dispersion of (1) were diluted to 600 parts with ion-exchanged water. 20 parts of 35% hydrochloric acid, 27 parts of butyl aldehyde were added thereto, and allowed the mixture to react at 25°C for 30 hours. The reactant was neutralized with sodium hydroxide, filtered, washed and dried at 50°C. 63 parts of a granular white solid pigment composition for pigment ink was obtained.

### 3) Ink formation (Preparation of Paint Marker Pigment Ink)

50 parts of the solid pigment composition for pigment ink of (2) were dispersed with allowing the resin to dissolve in 30 parts of xylene and 30 parts of n-propanol. No insoluble matter was found at this stage. 5 parts of an alkyd resin and 2 parts ofphthalocyanine blue dye (OIL COLOR) were added thereto, and this was thoroughly stirred until the dye dissolved. The pigment ink had a pigment concentration of 27.5%.

When this ink is written on an absorptive surface, titanium oxide which is a pigment does not move from a written location, whereas the blue dye dissolved in the ink spreads beyond the written location by the capillary action. As a result, written traces made of pigments are surrounded by skyblue blots at their peripheral. The pigment ink designed as such is usually called as paint marker pigment ink. The ink had an average particle size of 0.25 um and a viscosity of 32 mPa·s.

The pigment ink was spread on a glass board with a 5 um applicator, and dried. This was measured in transparent degree (or haze degree) with a haze meter NDH 2000 manufactured by Nippon Denshoku K.K. The transparent degree was found to be 92%, which shows sufficient covering ability.

The resulting pigment ink was loaded to a paint marker and conducted writing. The writing ability and colour density were excellent, and the written traces showed gloss and sufficient covering ability. The paint marker was allowed to stand at 50°C for 1 month in order to conduct the storage test. After the storage, it had good re-dispersing ability even though titanium oxide partially settled down. No change was found in particle size and viscosity.

### Comparative Example 4

160 parts of PVB having a polymerization degree of 200 and 50 parts of alkyd resin were dissolved in 345 parts of xylene and 345 parts of n-propanol, 350 parts of titanium oxide TIPAQUE R-820 manufactured by DuPont Co. were added thereto, and this was stirred with a dissolver. The resultant was dispersed until being 0.25 um with EBARA MILDER.

20 parts of phthalocyanine blue dye OIL COLOR were added thereto, and this was thoroughly stirred until the dye dissolved. The pigment ink had a pigment concentration of 27.5% likely to Example 4, and had a transparent degree determined by the haze meter of 75%.

The storage test was conducted according to the same manner as in Example 4. As a result, the titanium oxide precipitated to form hard cake, and the resulting supernatant had no covering ability. Even the marker was shaken, a stirring ball contained in the marker did not move.

### Example 5

### Preparation of Correction Solid Agent

50 parts of the granular white solid pigment composition for pigment ink obtained in Example 4 were dispersed with allowing their resin to dissolve in 20 parts of propylene glycol monomethyl ether, 15 parts of dipropylene glycol monomethyl ether, and 3 parts of dibutyl phthalate by heating to 120°C. 7 parts of a ketone resin and 5 parts of a gelation agent were added thereto and stirred until the resin dissolved with maintaining the temperature. The resultant was poured in a stick-shape container, and allowed to cool to form a solid correction agent. The correction agent showed excellent applying ability and covering ability.

### Example 6

### 1) PVA dissolution and pigment dispersing step

100 parts of PVA having a polymerization degree of 600 and a saponification degree of 75% were dissolved in 1700 parts of ion-exchanged water, 200 parts of carbon black having a primary particle size of 25 nm, pH of 3, and an oil absorption amount of 90 were added thereto, and stirred. This was dispersed until being 0.07 um with a horizontal-type beads mill. The resultant was subjected to centrifugation at 10000 G for 30 minutes to remove coarse particles.

### 2) Acetalation step

1000 parts of the pigment dispersion of (1) was diluted to 10 times by weight with ion-exchanged water, and moved this to a reaction container. 50 parts of hydrochloric acid, 75 parts of acetic acid, 50 parts of butyl aldehyde and 2 parts of benzaldehyde were added thereto, and this was allowed to react at 10°C for 10 hours. The reactant was neutralized with sodium hydroxide, filtered, washed and dried at 50°C. 165 parts of a granular black solid pigment composition for pigment ink was obtained.

### 3) Ink formation (Preparation of Ink-jet Recording Pigment Ink)

28 parts of the solid pigment composition for pigment ink of (2) was dispersed with allowing their resin to dissolve in 149 parts of triethylene glycol monobutyl ether, 20 parts of ethanol and 3 parts of triethanolamine over 3 hours to prepare ink-jet recording pigment ink. No insoluble matter was found at this stage. The pigment ink had a viscosity of 15 mPa·s, an average particle size of 0.05 um and a surfacetension of 29 mN/cm.

The pigment ink was printed with a commercially available ink-jet printer. Printing was conducted smoothly, an no clogging occurred during printing for 10 minutes. Recorded characters had an OD value of 1.38. The value was satisfactory in density.

The storage test of the pigment ink for 1 month was conducted with subjecting it to the conditioning cycle of:
at 10°C for 2 hours;
from 10°C to 50°C over 1 hour;
at 50°C for 2 hours; and
from 50°C to 10°C over 1 hour.

As a result, no change was found in particle size and viscosity. No sedimentation was also generated.

### Example 7

### 1) PVA dissolution and pigment dispersing step

100 parts of PVA having a polymerization degree of 300 and a saponification degree of 75% was dissolved with heating in 620 parts of ion-exchanged water, 80 parts of yellow pigment (isoindolinone-type C.I. Pigment Yellow 110) were added thereto, and stirred with a dissolver. This was dispersed until being 0.2 um with a horizontal-type beads mill to prepare a pigment dispersion having a pigment concentration of 10%.

### 2) Acetalation step

200 parts of the pigment dispersion of (1) was diluted with 1000 parts of ion-exchanged water, temperature was adjusted to 25°C, 24 parts of 35% hydrochloric acid, 23 parts of butyl aldehyde were added thereto, and allowed the mixture to react under stirring at 200 rpm at 15°C for 10 hours and at 50°C for 1 hour. The reactant was adjusted to pH 10 with 20% sodium hydroxide and stirred for 1 hour to finalize the reaction. This was filtered, washed with ion-exchanged water, and dried at 40°C. 47 parts of a granular yellow solid pigment composition for pigment ink was obtained.

### 3) Ink formation (Preparation of Marking Pen Pigment Ink)

15 parts of the solid pigment composition for pigment ink of (2) was dispersed with allowing their resin to dissolve in 80 parts of n-propanol for 1 hour. No insoluble matter was found at this stage. 5 parts of a maleic acid resin was dissolved thereto. The pigment ink had an average particle size of 0.2 um and a viscosity of 6.5 mPa·s. This pigment ink was loaded to a marking pen and conducted writing. The written traces were shown to be high density, and the writing feeling was excellent. Some lines were drawn on a glass board with this ink and allowed to dry sufficiently. Tissue paper and a 500g weight having a diameter of 4 cm were put on the lines and made them slide for 10 times. As a result, the lines did not come off.

### Comparative Example 5

80 parts of yellow pigment which is the same as Example 7, 110 parts of PVB that is S-LEC BL-S having a polymerization degree of 350 and saponification degree of 74%, and 50 parts of dibutyl adipate were kneaded with EBAEA MILDER™ at 100°C for 10 minutes. 20 parts of the mixture and 5 parts of a maleic acid resin were added to 75 parts of n-propanol, and dissolved. The pigment ink had an average particle size of 1.5 um and a viscosity of 9.8 mPa·s. This pigment ink was loaded to a marking pen and conducted writing. The written traces were shown to be low density, and was insufficient for the marking pen use. Some lines were drawn on a glass board with this ink and allowed to dry sufficiently. Tissue paper and a 500g weight having a diameter of 4 cm were put on the lines and made them slide. As a result, the line came off and disappeared by 1 or 2 slides.

### Example 8

### 1) PVA dissolution and pigment dispersing step

60 parts of PVA having a polymerization degree of 1000 and a saponification degree of 88% was dissolved in 160 parts of ion-exchanged water, 30 parts of carbon black having a primary particle size of 24 nm, pH of 7.5, and a DBP oil absorption amount of 50 were added thereto, and stirred with a dissolver. This was dispersed until being 130 nm with a vertical-type beads mill. The resultant was diluted with ion-exchanged water to obtain a pigment dispersion having a pigment concentration of 7%.

### 2) Acetalation step

400 parts of the pigment dispersion of (1) was diluted with 1300 parts of ion-exchanged water, temperature was adjusted to 10°C, 14 parts of phosphoric acid, 100 parts of n-propanol, and 84 parts of butyl aldehyde were added thereto. The mixture was allowed to react at 10°C for 24 hours and at 30°C for 24 hours. Sodium hydroxide was added to the reactant to adjust to neutral, 20 parts of 25% aqueous ammonia were added thereto, stirred for 1 hour to finalize the reaction. The reaction liquid was filtered, washed with water, and dried at 50°C to obtain 89 parts of a granular black solid pigment composition for pigment ink.

### 3) Ink formation (Preparation of Coating Composition Pigment Ink)

30 parts of the solid pigment composition for pigment ink of (2) was dispersed in 70 parts of ethanol at 50°C. Their resin was completely dissolved for about 1 hour. No residue was found when the dispersion was filtered with a wire net of 400 mesh. This dispersion was mixed with 100 parts of thinner lacquer (i.e., water soluble mixture solvents of xylene, methanol and methyl ethyl ketone) to prepare coating composition pigment ink. The pigment ink had an average particle size of 132 nm and a viscosity of 230 mPa·s.

The storage test of the pigment ink for 1 month was conducted with subjecting it to the conditioning cycle of:
at 10°C for 2 hours;
from 10°C to 50°C over 1 hour;
at 50°C for 2 hours; and
from 50°C to 10°C over 1 hour.

As a result, no change was found in particle size and viscosity. No sedimentation was also generated.

### Comparative Example 6

PVA which is the same as that employed in Example 8 was subjected to acetalation reaction as substantially the same manner except that carbon black was not employed to obtain PVB.

150 parts of the PVB was dissolved in 480 parts of ethanol, 70 parts of carbon black was added thereto, stirred with a dissolver, and dispersed until being 130 nm with a vertical-type beads mill. This pigment dispersion was mixed with 100 parts of the thinner lacquer. The pigment ink had an average particle size of 145 nm and a viscosity of 330 mPa·s.

The storage test was conducted according to the manner as in Example 8 (3), as a result, the average particle size was increased to 196 nm and the viscosity was increased to 515 mPa·s.

## Claims

1. A process for preparing a solid pigment composition for pigment ink comprising the steps of:
(a) dissolving polyvinyl alcohol in water, and dispersing pigments in the resulting solution;
(b) adding aldehyde derivatives to the resulting pigment dispersion and allowing the polyvinyl alcohol to react with the aldehyde derivatives to prepare polyvinyl acetal; and
(c) drying the acetalated pigment dispersion.

2. A process for preparing a solid pigment composition for pigment ink comprising the steps of:
(a) dissolving polyvinyl alcohol in water, and dispersing pigments in the resulting solution to adjust an average size of pigment particles not more than 500 nm;
(b) adding aldehyde derivatives to the resulting pigment dispersion and allowing the polyvinyl alcohol to react with the aldehyde derivatives to prepare polyvinyl acetal; and
(c) drying the acetalated pigment dispersion.

3. The process for preparing a solid pigment composition for pigment ink according to claims 1 or 2, wherein further comprising, prior to drying the acetalated pigment dispersion, a purifying step of:
removing impurities and produced salts from the pigment dispersion.

4. The process for preparing a solid pigment composition for pigment ink according to any one of claims 1 to 3, wherein the polyvinyl alcohol has a polymerization degree of 100 to 5000.

5. The process for preparing a solid pigment composition for pigment ink according to any one of claims 1 to 4, wherein the pigments are employed in an amount so that ratio by weight of the polyvinyl alcohol to the pigments is from 0.1/1 to 10/1.

6. The process for preparing a solid pigment composition for pigment ink according to any one of claims 1 to 5, wherein the polyvinyl acetal has an acetalation degree of not less than 50%.

7. The process for preparing a solid pigment composition for pigment ink according to any one of claims 1 to 6, wherein the polyvinyl alcohol is allowed to react with the aldehyde derivatives under a diluted condition so that ratio by weight of the pigments to water is from 1/100 to 1/10.

8. A solid pigment composition for pigment ink prepared by any one process of claims 1 to 7.

9. The solid pigment composition for pigment ink according to claim 8, wherein the polyvinyl acetal is contained in a ratio by weight relative to the pigments of from 0.05/1 to 3/1.

10. The solid pigment composition for pigment ink according to claim 8, in the form of particles having an average grain size of from 0.5 to 3 mm.

11. Pigment ink which comprises the solid pigment composition for pigment ink of claim 8 and a water-soluble organic solvent.

12. A process for preparing pigment ink comprising the step of:
mixing and dispersing the solid pigment composition for pigment ink of claim 8 in a solvent which contains a water-soluble organic solvent.

13. The pigment ink obtained by claim 12 which is pigment ink for writing implements (1), pigment ink for ink-jet recording (2), or pigment ink for wood coating compositions (3).

## Patentansprüche

1. Verfahren zur Herstellung einer festen Pigmentzusammensetzung für Pigmenttinte, umfassend die Schritte:
(a) Lösen von Polyvinylalkohol in Wasser und Dispergieren von Pigmenten in der resultierenden Lösung;
(b) Zugabe von Aldehydderivaten zu der resultierenden Pigmentdispersion und Umsetzen lassen des Polyvinylalkohols mit den Aldehydderivaten, um Polyvinylacetal herzustellen; und
(c) Trocknen der acetalisierten Pigmentdispersion.

2. Verfahren zur Herstellung einer festen Pigmentzusammensetzung für Pigmenttinte, umfassend die Schritte:
(a) Lösen des Polyvinylalkohols in Wasser und Dispergieren von Pigmenten in der resultierenden Lösung, um eine durchschnittliche Größe der Pigmentteilchen von nicht mehr als 500nm einzustellen;
(b) Hinzufügen von Aldehydderivaten zu der resultierenden Pigmentdispersion und Umsetzen lassen des Polyvinylalkohols mit den Aldehydderivaten, um Polyvinylacetal herzustellen; und
(c) Trocknen der acetalisierten Pigmentdispersion.

3. Verfahren zur Herstellung einer festen Pigmentzusammensetzung für Pigmenttinte nach den Ansprüchen 1 oder 2, wobei es weiterhin, vor dem Trocknen der acetalisierten Pigmentdispersion, einen Reinigungsschritt umfasst:
Entfernen von Verunreinigungen und gebildeten Salzen aus der Pigmentdispersion.

4. Verfahren zur Herstellung einer festen Pigmentzusammensetzung für Pigmenttinte nach einem der Ansprüche 1 bis 3, wobei der Polyvinylalkohol einen Polymerisationsgrad von 100 bis 5000 aufweist.

5. Verfahren zur Herstellung einer festen Pigmentzusammensetzung für Pigmenttinte nach einem der Ansprüche 1 bis 4, wobei die Pigmente in einer Menge eingesetzt werden, dass das Gewichtsverhältnis des Polyvinylalkohols zu den Pigmenten 0,1/1 bis 10/1 beträgt.

6. Verfahren zur Herstellung einer festen Pigmentzusammensetzung für Pigmenttinte nach einem der Ansprüche 1 bis 5, wobei das Polyvinylacetal einen Acetalisierungsgrad von nicht weniger als 50 % aufweist.

7. Verfahren zur Herstellung einer festen Pigmentzusammensetzung für Pigmenttinte nach einem der Ansprüche 1 bis 6, wobei man den Polyvinylalkohol mit den Aldehydderivaten unter verdünnten Bedingungen reagieren lässt, so dass das Gewichtsverhältnis der Pigmente zu Wasser 1/100 bis 1/10 beträgt.

8. Feste Pigmentzusammensetzung für Pigmenttinte, hergestellt durch ein Verfahren nach den Ansprüchen 1 bis 7.

9. Feste Pigmentzusammensetzung für Pigmenttinte nach Anspruch 8, wobei das Polyvinylacetal in einem Gewichtsverhältnis, bezogen auf die Pigmente, von 0,05/1 bis 3/1 enthalten ist.

10. Feste Pigmentzusammensetzung für Pigmenttinte nach Anspruch 8, in Form von Teilchen mit einer durchschnittlichen Korngröße von 0,5 bis 3 mm.

11. Pigmenttinte, umfassend die feste Pigmentzusammensetzung für Pigmenttinte nach Anspruch 8 und ein wasserlösliches organisches Lösungsmittel.

12. Verfahren zur Herstellung von Pigmenttinte, umfassend den Schritt:
Mischen und Dispergieren der festen Pigmentzusammensetzung für Pigmenttinte nach Anspruch 8 in einem Lösungsmittel, das ein wasserlösliches organisches Lösungsmittel enthält.

13. Pigmenttinte, erhalten durch Anspruch 12, welche Pigmenttinte für Schreibgeräte (1), Pigmenttinte für Tintenstrahlaufzeichnungen (2) oder Pigmenttinte für Holzbeschichtungs-Zusammensetzungen (3) ist.

## Revendications

1. Procédé pour la préparation d'une composition de pigment solide destinée à une encre pigmentaire, comprenant les étapes consistant :
(a) à dissoudre de l'alcool polyvinylique dans de l'eau, et à disperser des pigments dans la solution résultante ;
(b) à ajouter des dérivés aldéhydiques à la dispersion pigmentaire résultante et à faire réagir l'alcool polyvinylique avec les dérivés aldéhydiques pour préparer un acétal polyvinylique ; et
(c) à sécher la dispersion pigmentaire acétalisée.

2. Procédé pour la préparation d'une composition de pigment solide destinée à une encre pigmentaire, comprenant les étapes consistant :
(a) à dissoudre de l'alcool polyvinylique dans de l'eau, et à disperser des pigments dans la solution résultante pour étalonner une dimension moyenne des particules de pigment à une valeur pas supérieure à 500 nm ;
(b) à ajouter des dérivés aldéhydiques à la dispersion pigmentaire résultante et à faire réagir l'alcool polyvinylique avec les dérivés aldéhydiques pour préparer un acétal polyvinylique ; et
(c) à sécher la dispersion pigmentaire acétalisée.

3. Procédé pour la préparation d'une composition de pigment solide destinée à une encre pigmentaire selon la revendication 1 ou 2, comprenant en outre, avant le séchage de la dispersion pigmentaire acétalisée, une étape de purification consistant à :
éliminer les impuretés et les sels produits à partir de la dispersion pigmentaire.

4. Procédé pour la préparation d'une composition de pigment solide destinée à une encre pigmentaire selon l'une quelconque des revendications 1 à 3, dans lequel l'alcool polyvinylique a un degré de polymérisation de 100 à 5 000.

5. Procédé pour la préparation d'une composition de pigment solide destinée à une encre pigmentaire selon l'une quelconque des revendications 1 à 4, dans lequel les pigments sont utilisés dans une quantité telle que le rapport en poids de l'alcool vinylique sur les pigments soit de 0,1/1 à 10/1.

6. Procédé pour la préparation d'une composition de pigment solide destinée à une encre pigmentaire selon l'une quelconque des revendications 1 à 5, dans lequel l'acétal polyvinylique a un degré d'acétalisation pas inférieur à 50 %.

7. Procédé pour la préparation d'une composition de pigment solide destinée à une encre pigmentaire selon l'une quelconque des revendications 1 à 6, dans lequel l'alcool polyvinylique est mis à réagir avec les dérivés aldéhydiques sous une condition diluée de sorte à ce que le rapport en poids des pigments sur l'eau soit de 1/100 à 1/10.

8. Composition de pigment solide destinée à une encre pigmentaire préparée par l'un quelconque des procédés selon les revendications 1 à 7.

9. Composition de pigment solide destinée à une encre pigmentaire selon la revendication 8, dans laquelle l'acétal polyvinylique est contenu dans un rapport en poids relatif aux pigments de 0,05/1 à 3/1.

10. Composition de pigment solide destinée à une encre pigmentaire selon la revendication 8, sous la forme de particules ayant une dimension moyenne des grains de 0,5 à 3 mm.

11. Encre pigmentaire qui comprend la composition de pigment solide destinée à une encre pigmentaire selon la revendication 8 et un solvant organique hydrosoluble.

12. Procédé pour la préparation d'une encre pigmentaire comprenant l'étape consistant :
à mélanger et à disperser la composition de pigment solide destinée à une encre pigmentaire selon la revendication 8 dans un solvant qui contient un solvant organique hydrosoluble.

13. Encre pigmentaire obtenue selon la revendication 12, qui est une encre pigmentaire pour des instruments d'écriture (1), une encre pigmentaire pour enregistrement à jet d'encre (2), ou une encre pigmentaire pour des compositions d'enduit pour le bois (3).
